# EUROPEAN PATENT APPLICATION

(11) **EP 3 889 211 A1**
(43) Date of publication of application: **06.10.2021**
(21) Application number: 19890727.1
(22) Date of filing: 29.11.2019
(51) Int. Cl.: C08J 9/00, C08J 9/16, C08J 9/228, C08J 3/20, C08L 23/12, C08K 3/04

(54) **METHOD FOR MANUFACTURING SEMI-CONDUCTIVE POLYPROPYLENE RESIN FOAMED PARTICLES AND FOAMED MOLDED ARTICLE**

(30) Priority: 30.11.2018 KR 20180152140
(71) Applicant: Lotte Chemical Corporation, Seoul, 05551 (KR)
(72) Inventor: EOM, Se Yeon, Daejeon 34110 (KR); LIM, Sung Hwan, Daejeon 34110 (KR); KWON, Yong Jin, Daejeon 34110 (KR); JANG, Jun Hyeok, Daejeon 34110 (KR)
(74) Representative: Germain Maureau
(86) International application number: PCT/KR2019/016660
(87) International publication number: WO 2020/111849

(57) **Abstract**

A method for manufacturing semi-conductive polypropylene resin foamed particles of the present invention comprises the steps of: allowing carbon nanotubes to be adsorbed on surfaces of polypropylene resin composition pellets to manufacture carbon nanotube-adsorbed pellets (CNT-PP); and foaming the carbon nanotube-adsorbed pellets (CNT-PP) to form foamed particles.

## Description

### [Technical Field]

The present invention relates to a method of manufacturing semi-conductive polypropylene resin foamed particles and a molded foam article. More particularly, the present invention relates to a method of manufacturing polypropylene resin foamed particles which can exhibit stable surface resistance performance while allowing implementation of various colors other than a gray or black color, and a molded foam article.

### [Background Art]

Polymer foam has low thermal conductivity and high electrical insulation properties and thus is used in a wide range of fields such as beverage or food containers, trays, packing materials, midsoles for footwear, automobile seats, dielectrics, radio wave shields, insulators, packaging materials for electronic components, cushioning materials, and returnable cases. However, polymer foam having very low conductivity can generate static electricity, causing reduction in lifespan of electronic components or the risk of accidents such as fire.

In general, generation of static electricity can be easily controlled by increasing surface humidity of a related product. However, such a method of increasing the surface humidity to suppress generation of static electricity cannot be applied to products with low wettability or products vulnerable to high humidity, such as electronic devices.

Korean Patent Laid-open Publication No. 2018-7000787, Japanese Unexamined Patent Publication No. 2012-225005, Japanese Unexamined Patent Publication No. 2005-47714, and Japanese Unexamined Patent Publication No. 2002-340165 disclose methods of manufacturing a molded foam article using carbon black to maintain stable surface resistance without humidity control. However, molded foam articles manufactured by these methods exhibit a gray or black color and thus have problems of difficulty in meeting various consumer demands and extremely limited industrial applicability.

These problems are common when the amount of additives added during manufacture of foamed particles or molded articles exceeds a certain level. Therefore, there is a need for a method of manufacturing resin foamed particles and molded articles having sufficient antistatic performance with minimal addition of additives during the manufacturing process.

### [Disclosure]

### [Technical Problem]

It is one object of the present invention to provide a method of manufacturing semi-conductive polypropylene resin foamed particles which can exhibit stable surface resistance performance with a small quantity of additives.

It is another object of the present invention to provide a method of manufacturing polypropylene resin foamed particles which allows implementation of various colors other than gray or black while exhibiting stable surface resistance performance.

It is a further object of the present invention to provide a molded foam article manufactured by molding semi-conductive polypropylene resin foamed particles manufactured by the method set forth above.

The above and other objects of the present invention will become apparent from the detailed description of the following embodiments.

### [Technical Solution]

1. One aspect of the present invention relates to a method of manufacturing semi-conductive polypropylene resin foamed particles. The method includes: preparing carbon nanotube-adsorbed pellets (CNT-PPs) by adsorbing carbon nanotubes onto surfaces of polypropylene resin composition pellets; and forming foamed particles by expanding the carbon nanotube-adsorbed pellets (CNT-PPs).
2. In Embodiment 1, adsorption of the carbon nanotubes may be performed by adding the carbon nanotubes directly to the polypropylene resin composition pellets without using a binder, followed by stirring.
3. In Embodiments 1 and 2, the polypropylene resin composition pellets may have an aspect ratio (length/diameter) of 1 to 3.
4. In Embodiments 1 to 3, the carbon nanotube-adsorbed pellets (CNT-PPs) may be prepared by stirring a mixture of the polypropylene resin composition pellets and the carbon nanotubes at 500 rpm to 1,000 rpm.
5. In Embodiments 1 to 4, the carbon nanotubes may be present in the mixture in an amount of greater than 0.1 parts by weight and less than 1 part by weight relative to 100 parts by weight of the polypropylene resin composition pellets.
6. In Embodiments 1 to 5, stirring the mixture may be performed for 10 to 30 minutes.
7. In Embodiments 1 to 6, expanding the carbon nanotube-adsorbed pellets may include forming spherical foamed particles by adding a dispersion medium, a dispersant, and a foaming agent to the carbon nanotube-adsorbed pellets (CNT-PPs).
8. In Embodiments 1 to 7, the carbon nanotubes may have an aspect ratio (length/diameter) of 125 to 5,000,000.
9. Another aspect of the present invention relates to a molded foam article. The molded foam article is manufactured by molding the semi-conductive polypropylene resin foamed particles manufactured by the method according to any one of Embodiments 1 to 8, and has a surface resistance of 10⁵ Ω/sq to 10⁸ Ω/sq.

### [Advantageous Effects]

The present invention provides a method for manufacturing semi-conductive polypropylene resin foamed particles which can exhibit stable surface resistance performance with a small quantity of additives and allows implementation of various colors other than gray or black, and a molded foam article.

### [Description of Drawings]

FIG. 1 is a schematic cross-sectional view of carbon nanotube-adsorbed polypropylene foamed particles according to one embodiment of the present invention.
FIG. 2 is a schematic cross-sectional view of carbon nanotube/polypropylene-blended foamed particles prepared according to Comparative Example 7.

### [Best Mode]

The terminology used herein is for the purpose of describing particular embodiments only and is not intended to be limiting of the invention. As used herein, terms such as "including," "having," and "containing" are open-ended terms regardless of where they are used in this specification. In addition, sequence terms, such as "first," "second," and the like, do not indicate relative importance, priority, or temporal order between elements and are intended to be used to easily distinguish one element from another element.

As used herein to represent a specific numerical range, the expression "a to b" means "≥ a and ≤ b".

### Method of manufacturing semi-conductive polypropylene resin foamed particles

A method of manufacturing semi-conductive polypropylene resin foamed particles according to the present invention includes: adsorbing carbon nanotubes (CNTs) onto surfaces of polypropylene resin pellets; and expanding the carbon nanotube-adsorbed polypropylene pellets. In some embodiments, the method includes: preparing carbon nanotube-adsorbed pellets (CNT-PPs) by adsorbing carbon nanotubes onto surfaces of polypropylene resin composition pellets; and forming foamed particles by expanding the carbon nanotube-adsorbed pellets (CNT-PPs).

The polypropylene resin composition pellets may be commercially available pellets commonly used in foamed particles and molded articles thereof, or may be obtained by extruding a polypropylene resin along with various additives, followed by cutting into pellets. Although the shape of the pellets is not particularly restricted, the pellets may have a circular or cylindrical shape.

The polypropylene resin may be a propylene homopolymer or a propylene-based copolymer having a propylene content of 50 wt% or more. The propylene-based copolymer may include at least one polypropylene selected from among a copolymer of propylene and ethylene or olefin, such as an ethylene-propylene copolymer, a propylene-butane copolymer, and a propylene-ethylene-butene copolymer, a propylene-acrylic acid copolymer, and a propylene-maleic anhydride copolymer. Although the structure of these copolymers is not particularly limited, the copolymers may be in the form of a block copolymer, a random copolymer, or a graft copolymer.

In some embodiments, the polypropylene resin composition pellets may have an aspect ratio (length/diameter) of 1 to 3, specifically 1.2 to 2. Within this range, uniform adsorption of the carbon nanotubes on the polypropylene resin composition pellets can be achieved and the polypropylene resin composition pellets can exhibit stable surface resistance after being expanded.

Although the structure or size of the carbon nanotubes is not particularly restricted, the carbon nanotubes may be single-walled, double-walled, or multi-walled carbon nanotubes. The carbon nanotubes may have an aspect ratio (length/diameter) of 125 to 5,000,000, for example, 500 to 4,000,000, specifically 1,250 to 3,000,000. Within this range, the carbon nanotubes can exhibit good adsorption onto polypropylene while providing stable surface resistance.

The carbon nanotube-adsorbed pellets (CNT-PPs) may be prepared by stirring a mixture of the polypropylene resin composition pellets and the carbon nanotubes. The mixture is prepared by adding the carbon nanotubes directly to the polypropylene resin composition pellets without using a binder, followed by stirring. Here, the carbon nanotubes are physically adsorbed on the surfaces of the polypropylene resin composition pellets.

The carbon nanotubes may be present in the mixture in an amount of greater than 0.1 parts by weight and less than 1 part by weight relative to 100 parts by weight of the polypropylene resin composition pellets. If the amount of the carbon nanotubes is 0.1 parts by weight or less, desired antistatic effects cannot be achieved due to increase in surface resistance. If the amount of the carbon nanotubes is 1 part by weight or more, conductivity of the carbon nanotube-adsorbed pellets can be increased. Preferably, the carbon nanotubes are present in the mixture in an amount of 0.15 parts by weight to 0.75 parts by weight, more preferably 0.2 parts by weight to 0.5 parts by weight, and still more preferably 0.2 parts by weight to 0.45 parts by weight, relative to 100 parts by weight of the polypropylene resin composition pellets.

In one embodiment, adsorption of the carbon nanotubes may be performed by adding the carbon nanotubes directly to the polypropylene resin composition pellets without using a binder, followed by stirring.

Stirring of the mixture is performed at 500 rpm to 1,000 rpm, for example, 550 rpm to 950 rpm, preferably 600 rpm to 850 rpm. Within this range, desorption of the carbon nanotubes can be minimized and uniform adsorption of the carbon nanotubes on the surfaces of the polypropylene resin composition pellets can be achieved.

In addition, stirring the mixture is performed for 10 to 30 minutes, for example, 15 to 25 minutes, preferably 17 to 22 minutes. Within this range, desorption of carbon nanotubes can be minimized.

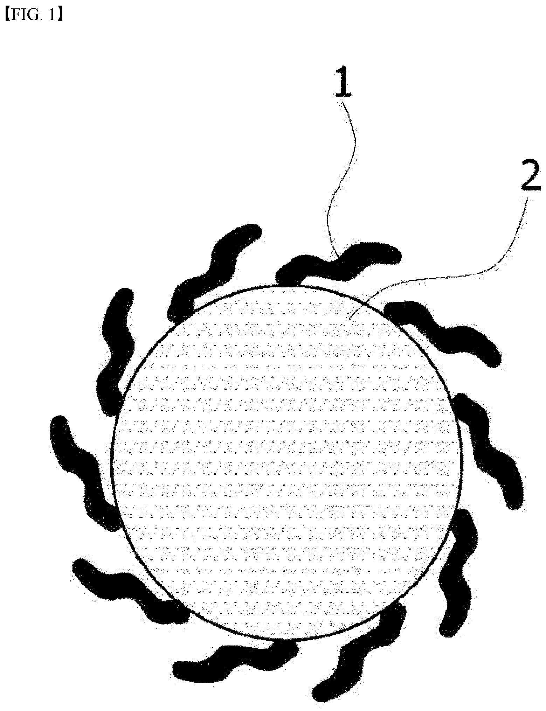

A schematic view of the carbon nanotube-adsorbed pellets (CNT-PPs) prepared as described above is shown in FIG. 1.

FIG. 1 is a schematic cross-sectional view of a carbon nanotube-adsorbed polypropylene foamed particle according to one embodiment of the present invention. Referring to FIG. 1, the carbon nanotube-adsorbed pellet (CNT-PP) has a structure in which carbon nanotubes 1 are physically adsorbed on the surface of a polypropylene resin composition pellet 2. In this case, the carbon nanotube-adsorbed pellets (CNT-PPs) are subsequently expanded to form the foamed particles.

In some embodiments, expanding the carbon nanotube-adsorbed pellets may include forming spherical foamed particles by adding a dispersion medium, a dispersant, and a foaming agent to the carbon nanotube-adsorbed pellets (CNT-PPs).

In some embodiments, the foamed particles may be obtained by reacting the carbon nanotube-adsorbed pellets (CNT-PPs) with the dispersion medium, the dispersant, and the foaming agent in a reactor. Specifically, expansion of the carbon nanotube-adsorbed pellets may be performed through a process in which the carbon nanotube-adsorbed pellets (CNT-PPs) are dispersed together with the dispersant and the dispersion medium in an aqueous medium in a closed pressurizable container and then impregnated with the foaming agent under predetermined pressurization and heating conditions, followed by releasing the aqueous medium and other contents from the container at a pressure lower than the internal pressure of the container under temperature conditions suitable for expansion.

The dispersion medium may include any suitable compound known in the art without limitation. For example, the dispersion medium may include at least one selected from among water, ethylene glycol, glycerin, methanol, and ethanol.

The dispersant may include any typical compound that can serve to prevent the pellets from sticking to one another during the reaction. An inorganic dispersant and an organic dispersant may be selectively used as the dispersant. For example, the dispersant may include at least one selected from among calcium stearate, zinc stearate, magnesium stearate, lauric acid, myristic acid, palmitic acid, aluminum oxide, tricalcium phosphate, magnesium pyrophosphate, zinc oxide, kaolin, mica, polysaccharide (dextrin), polyethyleneimine (PEI), polyvinylpyrrolidone (PVP), polyethylene oxide (PEO), tetraoctylammonium bromide, polysorbate 80, and α-[4-(1,1,3,3 tetramethylbutyl)phenyl]-ω-hydroxy.

The foaming agent may include any typical organic or inorganic physical foaming agent without limitation. For example, the foaming agent may include at least one selected from among aliphatic hydrocarbons, propane, butane, hexane, pentane, heptane, cyclobutane, cyclohexane, methyl chloride, ethyl chloride, methylene chloride, dimethyl ether, diethyl ether, methyl ethyl ether, nitrogen, carbon dioxide, and argon.

The reactor may include any suitable reactor known in the art, such as a continuous stirring tank reactor and a batch reactor. It will be understood that process conditions can be appropriately adjusted by those skilled in the art depending on the type of reactor used and the amount of the pellets, the dispersion medium, the dispersant, or the foaming agent.

The foamed particles manufactured as described above are carbon nanotube-adsorbed polypropylene foamed particles and can exhibit stable surface resistance even with a small quantity of carbon nanotubes.

### Molded foam article

The foamed particles are manufactured into a molded foam article through a molding process including filling a mold with the foamed particles and sintering the foamed particles using steam as a heating medium, followed by cooling.

The molding process may be any typical process used in manufacture of a molded article of foamed particles, for example, in-mold molding. More specifically, a mold designed to have a predetermined shape is filled with the carbon nanotube-adsorbed polypropylene foamed particles, followed by heating the interior of the mold by supplying steam into the mold, such that adjacent foamed particles are fused together and secondarily expanded to fill gaps therebetween, resulting in integration of the foamed particles in the mold. The mold may have any shape corresponding to the shape of the molded article of the foamed particles, as needed or desired. For example, the mold may have various three-dimensional shapes such as a tubular shape or a column shape.

Although cooling of the molded foam article may be performed by any suitable method, the molded foam article may be cooled by injecting cold water into the mold after the molding process. Then, the molded foam article may be secondarily cooled in the atmosphere after being released from the mold.

The molded article of the semi-conductive polypropylene resin foamed particles exhibits a light gray color when containing no colorant. Accordingly, addition of a suitable colorant can impart a desired color to the molded article. In addition, the molded article of the semi-conductive polypropylene resin foamed particles has a stable surface resistance of 10⁵ Ω/sq to 10⁸ Ω/sq, preferably 10⁵ Ω/sq to 10⁷ Ω/sq, more preferably 10⁵ Ω/sq to 10^{6 5} Ω/sq, thereby securing both electrical insulation performance and antistatic performance.

The following shows results of comparing the color and surface resistance value of a molded article of semi-conductive polypropylene resin foamed particles manufactured by the method set forth above with a molded article of semi-conductive resin foamed particles manufactured differently.

Next, the present invention will be described in more detail with reference to some examples. It should be understood that these examples are provided for illustration only and are not to be in any way construed as limiting the present invention.

In addition, description of details apparent to those skilled in the art will be omitted for clarity.

### EXAMPLE

Details of components used in Examples and Comparative Examples are as follows:
(a) Polypropylene resin composition pellets: Cylindrical polypropylene resin composition pellets (1.0 mg to 1.2 mg, Φ: 0.7 mm×1 mm) were used.
(b1) Carbon nanotubes: Double-walled carbon nanotubes (length: 100 to 200 µm, aspect ratio: 2,500 to 2,000,000) were used.
(b2) Graphene: Graphene oxide powder (diameter: 1 µm to 5 µm, thickness: 0.8 nm to 1.2 nm) was used.
(b3) Conductive carbon black: Conductive carbon black manufactured by AkzoNobel (trade name: Ketjenblack EC-300J) was used.

### Example 1

A mixture obtained by mixing the polypropylene resin composition pellets with the carbon nanotubes in amounts shown in Table 1 was stirred at 800 rpm to 1,000 rpm for 20 minutes, thereby preparing carbon nanotube-adsorbed pellets (CNT-PPs). Thereafter, about 300 parts by weight of water containing a dispersant was added to 100 parts by weight of the carbon nanotube-adsorbed pellets (CNT-PPs) in an autoclave reactor, followed by heating the reactor to a temperature of 100°C to 140°C, and then CO₂ as a foaming agent was introduced into the reactor such that the reactor was maintained at a pressure of 30 kgf/cm² to 45 kgf/cm², followed by expanding the carbon nanotube-adsorbed pellets, thereby preparing spherical foamed particles. The prepared foamed particles were pre-pressurized at room temperature and a pressure of 2.0 bar to 3.0 bar for 12 hours and allowed to fill a mold, followed by heating using steam at a pressure of 1.4 kgf/cm² to 3.0 kgf/cm², and then the surface of the resultant was cooled, thereby obtaining a molded foam article. The obtained molded foam article was evaluated as to the following properties. Results are shown in Table 1.

### Examples 2 to 3

Molded foam articles were manufactured in the same manner as in Example 1 except that the amounts of the polypropylene resin composition pellets and the carbon nanotubes were changed as listed in Table 1.

### Example 4

A molded foam article was manufactured in the same manner as in Example 1 except that a polypropylene master batch containing a pink colorant was added in preparation of the carbon nanotube-adsorbed pellets and the amounts of the polypropylene resin composition pellets and the carbon nanotubes were changed as listed in Table 1.

### Comparative Examples 1 to 2

Molded foam articles were manufactured in the same manner as in Example 1 except that the amounts of the polypropylene resin composition pellets and the carbon nanotubes were changed as listed in Table 1.

### Comparative Example 3

A molded foam article was manufactured in the same manner as in Example 1 except that, instead of the carbon nanotubes, graphene was used in an amount shown in Table 2.

### Comparative Example 4

10 parts by weight of conductive carbon black was mixed with 100 parts by weight of a polypropylene resin, followed by extrusion, thereby preparing pellets, which, in turn, were expanded and molded under the same conditions as in Example 1.

### Comparative Example 5

10 parts by weight of conductive carbon black and 4 parts by weight of a polypropylene master batch containing a pink colorant were mixed with 100 parts by weight of a polypropylene resin, followed by extrusion, thereby preparing pellets, which, in turn, were expanded and molded under the same conditions as in Example 1.

### Comparative Example 6

After applying an adhesive to surfaces of the polypropylene resin composition pellets, a coating solution obtained by mixing the carbon nanotubes (CNTs) with isopropyl alcohol, a dispersant, toluene, and an ether additive was coated onto the adhesive layer, followed by mixing a water-soluble acrylic resin binder with the carbon nanotubes, and then the resulting pellets were expanded and molded under the same conditions as in Example 1.

### Comparative Example 7

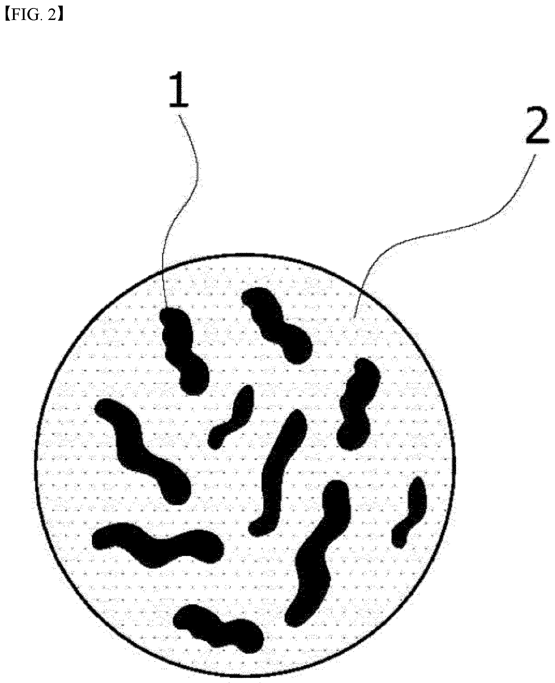

0.5 parts by weight of the carbon nanotubes were mixed with 100 parts by weight of a polypropylene resin, followed by extrusion, thereby preparing pellets, which, in turn, were expanded and molded under the same conditions as in Example 1. A schematic cross-section of the resulting pellets is shown in FIG. 2. FIG. 2 is a schematic view of a carbon nanotube/polypropylene-blended foamed particle manufactured according to Comparative Example 7. Referring to FIG. 2, the foamed particle has a structure in which the carbon nanotubes 1 are dispersed over the entire region of the polypropylene resin composition pellet 2, including the surface and the interior of the pellet.

### Property evaluation

(1) Surface resistance: Surface resistance was measured using a surface resistance meter (model name: SURPA-9802, manufacturer: SURPA) in accordance with Korean industrial standard KS C IEC 60093.
(2) Color: Color of the surface of each of molded articles prepared in Examples and Comparative Examples was evaluated with the naked eye.

The composition, surface resistance, and color of each of the molded articles manufactured in Examples and Comparative Examples are as shown in Tables 1 and 2.

**Table 1**

| Item | | Example 1 | Example 2 | Example 3 | Example 4 |
|---|---|---|---|---|---|
| Composition | Polypropylene | 100 | 100 | 100 | 96 |
| | Carbon nanotube | 0.5 | 0.5 | 0.2 | 0.2 |
| | Graphene | - | - | - | - |
| | Conductive carbon black | - | - | - | - |
| | ColorM/B (pink) | - | - | - | 4 |
| Properties of molded article | Surface resistance (Ω/sq) | 10^{5.0} | 10^{5.5} | 10^{5.8} | 10^{5.8} |
| | Color | Light gray | Light gray | Light gray | Dark pink |

**Table 2**

| Item | | Comp. Example 1 | Comp. Example 2 | Comp. Example 3 | Comp. Example 4 | Comp. Example 5 | Comp. Example 6 | Comp. Example 7 |
|---|---|---|---|---|---|---|---|---|
| Composition | Polypropylene | 100 | 100 | 100 | 100 | 100 | 100 | 100 |
| | Carbon nanotube | 1 | 0.1 | - | - | - | 0.5 | 0.5 |
| | Binder | - | - | - | - | - | 8 | - |
| | Graphene | - | - | 5 | - | - | - | - |
| | Conductive carbon black | - | - | - | 10 | 10 | - | - |
| | ColorM/B (pink) | - | - | - | - | 4 | - | - |
| Properties of molded article | Surface resistance (Ω/sq) | 104.9 | 109.4 | 1010.5 | 107.2 | 107.2 | 1011.0 | 1012.0 |
| | Color | Light gray | Light gray | Dark gray | Black | Black | Light gray | Light gray |

As shown above, it was confirmed that the molded articles of Comparative Examples 3 to 5, manufactured using graphene or conductive carbon black instead of the carbon nanotubes exhibited a black or dark gray color, making it impossible to implement various colors, which is the purpose of the present invention.

In addition, the molded articles of Comparative Examples 1 and 2, in which the amount of the carbon nanotubes was outside the range set forth herein, failed to exhibit stable surface resistance, which is the purpose of the present invention. Further, the molded article of Comparative Example 6 exhibited extremely high surface resistance and was very costly and time-consuming to manufacture since additional use of a binder and additional adhesive layer application and drying processes were required for adsorption of the carbon nanotubes.

In addition, the molded article of Comparative Example 7, manufactured using foamed particles having a structure in which the carbon nanotubes were dispersed inside the polypropylene resin composition pellets rather than adsorbed on the surfaces of the polypropylene resin composition pellets, exhibited excessively high surface resistance and thus was not suitable for solving the technical problem that the present invention seeks to solve.

Although some embodiments have been described herein, it should be understood that the present invention is not limited to the following embodiments and may be embodied in different ways and that various modifications, changes, alterations, and equivalent embodiments can be made by those skilled in the art without departing from the spirit and scope of the invention. Therefore, it should be understood that these embodiments are provided for illustration only and are not to be construed in any way as limiting the present invention.

## Claims

1. A method of manufacturing semi-conductive polypropylene resin foamed particles, comprising:
preparing carbon nanotube-adsorbed pellets (CNT-PPs) by adsorbing carbon nanotubes onto surfaces of polypropylene resin composition pellets; and
forming foamed particles by expanding the carbon nanotube-adsorbed pellets (CNT-PPs).

2. The method according to claim 1, wherein adsorption of the carbon nanotubes is performed by adding the carbon nanotubes directly to the polypropylene resin composition pellets without using a binder, followed by stirring.

3. The method according to claim 1, wherein the polypropylene resin composition pellets have an aspect ratio (length/diameter) of 1 to 3.

4. The method according to claim 1, wherein the carbon nanotubes are present in an amount of greater than 0.1 parts by weight and less than 1 part by weight relative to 100 parts by weight of the polypropylene resin composition pellets.

5. The method according to claim 1, wherein expanding the carbon nanotube-adsorbed pellets comprises forming spherical foamed particles by adding a dispersion medium, a dispersant, and a foaming agent to the carbon nanotube-adsorbed pellets (CNT-PPs).

6. The method according to claim 1, wherein the carbon nanotubes have an aspect ratio (length/diameter) of 125 to 5,000,000.

7. A molded foam article manufactured by molding the semi-conductive polypropylene resin foamed particles manufactured by the method according to any one of claims 1 to 6, the molded foam article having a surface resistance of 10⁵ Ω/sq to 10⁸ Ω/sq.
